# EUROPEAN PATENT SPECIFICATION

(11) **EP 4 233 036 B1**
(45) Date of publication and mention of the grant of the patent: **24.12.2025**
(21) Application number: 21805578.8
(22) Date of filing: 20.10.2021
(51) Int. Cl.: G09B 23/28, G09B 23/30

(54) **IMPROVEMENTS IN OR RELATING TO A COVER**
VERBESSERUNGEN AN ODER IM ZUSAMMENHANG MIT EINER ABDECKUNG
PERFECTIONNEMENTS APPORTÉS OU SE RAPPORTANT À UN ÉLÉMENT DE RECOUVREMENT

(30) Priority: 21.10.2020 GB 202016707
(43) Date of publication of application: 30.08.2023
(73) Proprietor: Limbs & Things Limited, Bristol BS2 0RA (GB)
(72) Inventor: LARGE, Amy, Bristol BS2 0RA (GB)
(74) Representative: Stratagem IPM Limited
(86) International application number: PCT/GB2021/052719
(87) International publication number: WO 2022/084674

(56) References cited:
- CN-U- 210 743 365
- JP-A- 2017 053 066

## Description

The present invention relates to improvements in or relating to covers, and more specifically, to covers for enclosing a core.

Healthcare professionals require specialist training and therefore high quality healthcare simulation models of the human body with realistic haptics are a necessity. A typical model includes a core enclosed by a cover, wherein the core simulates an écorché figure, or a part thereof, and the cover simulates the skin. Over time, covers become worn-out and need replacing. Consequently, the cover must be removable and replaceable. However, covers are required to be tightly fitted to the core to enable realistic haptics and are often made from tensile materials, such as silicone or thermoplastic elastomers (TPEs), thus resulting in a time consuming and difficult replacement process.

For example, venepuncture is one of the most performed procedures in healthcare. Therefore, models that allow users to practise venepuncture are commonly used within the industry. A typical venepuncture model includes a core enclosed by a cover comprising two layers. There is an inner layer which comprises a plurality of channels configured to receive an artificial vein that can be punctured. Furthermore, there is an outer layer which simulates the skin and is configured to cover the inner layer, thus enabling users to practise puncturing the veins through the skin-like outer layer.

Covers are most commonly applied to the core much like a glove to a hand, wherein the inner layer of the cover is initially placed at one end of the core and is pulled along the length of the core until correctly positioned. The artificial veins are then fitted into the inner layer and the outer layer of the cover is then applied using the same method as the inner layer. However, applying the outer layer of the cover often causes the veins to move from their intended position thus rendering the model unfit for purpose. In situations where veins have moved from their correct positions, the user is required to re-remove the outer layer of the cover, re-position the veins within the inner layer of the cover and then re-apply the outer layer. This process is often required to be repeated multiple times.

Consequently, some covers comprise a longitudinal slit to improve the ease with which they can be fitted around a core. The slit is configured to be rejoined via a fixing mechanism, such as a zip or hook-and-loop fastener, to enclosing the core. However, these fixing mechanism are visible to the user, thus having a negative impact on the haptics and realism of the resulting cover. Moreover, these covers are expensive and difficult to manufacture.

JP2017053066 discloses a reversible jacket, capable of being worn with a front surface of a first face or a second face which is the rear face of the first face, includes button holes formed in each right/left front parts and double side buttons which can be detachably attached to the button holes. The double side button has a pair of button substrates and connection part mutually connecting the pair of button substrates. The size of the button hole is set mostly same as the maximum diameter of the button substrate of double side button.

Moreover, CN210743365 discloses a portable venipuncture simulation arm training instrument in the field of service support of army, wherein a hand arm part and a palm part are connected through a rotating mechanism, the hand arm part and the palm part respectively comprise a closed outer shell made of plastics, the inner part of the outer shell is provided with fillers, the outer surface of the outer shell is provided with a plurality of mounting grooves, 1 hose is embedded in each mounting groove, the outer sleeve body made of sponge is sleeved on the periphery of each hose, the color of the outer sleeve body is blue, a cylindrical first simulation skin layer made of rubber is sleeved on the outer shell of the arm part, openings are arranged at two ends of the first simulation skin layer, the glove-shaped second simulated skin layer made of rubber is sleeved on the outer shell of the palm portion, an opening is formed in the position, close to the wrist, of the second simulated skin layer, and a tightening mechanism is arranged at each opening.

It is against this background that the present invention has arisen.

According to the present invention there is provided a cover for a core, the cover comprising at least two openings, wherein the cover is configured to provide an enclosure to accommodate the core when the at least two openings are aligned.

A cover configured to provide an enclosure to accommodate the core when the at least two openings are aligned enables the cover to be secured in the correction position by a fastener. At least one opening may allow a fastener to pass therethrough. Alternatively, or in addition, at least one opening may be configured to receive a fastener. When the at least two openings are aligned, a fastener may pass through at least one opening and be received by at least a second opening. Alternatively, or in addition, the fastener may be received by at least two openings.

The fastener may be applied during the final stages of applying the cover, which enables the cover, or at least a portion thereof, to be less-tightly fitted to the core during the initial stages of application. This significantly improves the ease with which a user can fit and replace the cover. As a result, the cover can be reconfigured once in the correct position so the cover is not pulled onto the core in its final configuration, but rather in a loosened or untied configuration thus removing any requirement to pull the cover along the length of the core. This reduces the risk of movable elements of the core, such as artificial veins and/or organs, from their correct positions. It also reduces the time required to replace the cover. For example, the cover, or at least a part thereof, may be wrapped around the core before being secured in place, which significantly improves the ease with which the cover can be correctly positioned on the core.

The openings, of which there are at least two, may not be visible from at least one surface of the cover when the cover encloses the core. This prevents the fastener from being visible when the cover is correctly and completely fitted on the core. Therefore, the present invention improves the ease with which the cover can be removed and/or replaced whilst maintaining a visually accurate model.

Alternatively, or in addition, the cover may comprise at least two openings, wherein the openings are configured to be aligned when a predetermined portion of the core is enclosed by the cover. The cover may be configured to enclose the entirety of the core when correctly positioned. Alternatively, the cover may be configured to enclose only a predetermined portion of the core when correctly positioned.

At least one opening may be a recess. The recess may be sized and positioned to receive a fastener. The recess may be contained within the cover such that the recess can receive a fastener from a first side whilst not being visible from a second side, in use.

At least one opening may be a hole. A hole may be sized and positioned such that a fastener can pass therethrough.

When the cover comprises at least one hole and at least one recess, a fastener may be configured to pass through the at least one hole and be received by the at least one recess, thus securing the cover in the correct position around the core.

In some embodiments, the surface area of the cover may be smaller than the surface area of the core to be covered. A cover with a smaller surface area than the surface area of the core to be covered requires the cover to be stretched around the core, thus ensuring that a suitable amount of tension is stored within the cover. The surface area of the cover may be at least 1% smaller than the surface area of the core to be enclosed. In some embodiments, the surface area of the cover may be at least 2%, 5%, 10% or 15% smaller than the surface area of the core to be enclosed.

In some embodiments the surface area of the cover may be substantially equal to the surface area of the core to be covered.

The surface area of the cover may be greater than the surface area of the core to be covered. A cover with a greater surface area than the surface area of the core to be covered ensures that the surface area of the core to be covered is fully covered. The surface area of the cover may be at least 1% larger than the surface area of the core to be enclosed. In some embodiments, the surface area of the cover may be at least 1%, 2%, 5%, 10% or 15% larger than the surface area of the core to be enclosed.

At least one opening may be located in a first portion of the cover and at least one opening may be located in a second portion of the cover. Locating at least one opening in the first portion of the cover and at least one opening in the second portion of the cover ensures that the openings are initially spaced apart. This allows the cover, or a part of the cover, to be wrapped around the core, thus causing alignment of the openings. A fastener may then be used to fix the cover in place. Therefore, the first and second portion of the cover may overlap when two of the openings are aligned.

For example, the first portion may be an inner layer of the cover and the second portion may be an outer layer of the cover. Alternatively, the first portion and the second portion may be different areas or regions of a single layer of the cover.

At least one of the first and second portions may have a greater thickness than a third portion of the cover. At least one portion with an increased thickness provides a larger volume in which to incorporate at least one opening. This reduces the likelihood of the cover ripping or tearing in the vicinity of an opening. A larger opening therefore may be used, which enables a more secure connection to be made with a fastener, in use. Furthermore, the increased thickness reduces the ability of a user to see or feel the fastener within the cover, thus resulting in the fastener being impalpable and the resulting model being more realistic.

For example, the first portion and the second portion may be located on an outer layer of the cover and the third portion may be located on an inner layer of the cover. Alternatively, the first, second and third portions may be different areas or regions of a single layer of the cover.

A part of the cover may be preformed to conform to a part of the core. The part of the cover that creates the enclosure may be devoid of openings and recesses. This enables the preformed part to conform closely to the shape of the core, which may be a complex shaped core such as a hand, foot or head. The part of the cover that is preformed to conform to a part of the core may be located in the third portion of the cover. Alternatively, or in addition, the part of the cover that is preformed to conform to a part of the core may be located in the first and/or second portion of the cover.

The preformed part of the cover may be sealed at one end. A preformed part of the cover that is sealed at one end may be configured to enclose a predetermined portion of the core. For example, the enclosure may be configured to conform to an arm and the sealing at one end may cover a hand-shaped portion of a core. Alternatively, the enclosure may be configured to conform to a leg and the sealing at one end may cover a foot-shaped portion of a core. The sealed end may also be used to ensure correct alignment of the cover with at least part of the core. This will ensure the cover is correctly positioned with respect to the core.

The preformed part of the cover may be no more than half of the length of the cover. A preformed part of the cover is no more than half of the length of the cover enables at least half of the length of the cover to be wrapped around the core before being secured in place. This ensures that the cover can be easily fitted on the core even when the cover comprises a preformed portion.

At least one opening may comprise a neck portion and a void portion. The neck portion may be narrower than the void portion. A thinner neck portion may be configured to receive a fastener temporarily when a predetermined amount of force is applied. The fastener may move through the neck portion to be received by the void portion, thus securing the fastener to the cover. The thinner neck portion therefore prevents the fastener from being removed from the cover without application of the predetermined force.

At least one opening may comprise a magnet. At least one opening comprising a magnet enables magnetic fastening means to be used to secure the cover on the core. A magnetic fastener increasing the ease with which a user can secure the cover on the core and remove the cover from the core.

At least two of the openings, possibly each of the openings, may comprise a magnet. Each of the openings that comprise a magnet provides sufficient attraction to secure the cover around the cover when the openings are aligned without the need for an additional fastener. This reduces the number of components required to secure the cover around the core.

If magnets are provided, they may be sealed within the thickness of the cover. This is intended to prevent the magnets from easily being removed from the cover. Moreover, the cover may prevent the magnetic field from being detectable from at least one surface of the cover. This would prevent the magnets from interacting with magnetic objects, such as needles or stethoscopes, in use.

The cover may comprise an inner layer and an outer layer. An inner layer and an outer layer may be used to ensure that the core is entirely enclosed. Furthermore, the inner layer may be configured to receive an element, such as an artificial vein, and the outer portion may be configured to cover the inner layer and the element. This may enable the outer layer to be removed and replaced independently of the inner layer. This is advantageous because the outer layer is likely to require more frequent replacement.

Moreover, the inner layer may be configured to receive a faster and hold it in position. The outer layer may then enclose the inner layer using the fastener to secure its position.

The inner layer may comprise at least one opening and the outer layer may comprise at least one opening. An inner layer comprising at least one opening and an outer layer comprising at least one opening enables a fastener to connect the two layers via at least two openings. For example, the inner layer may comprise a hole and the outer layer may comprise a recess. The faster may therefore pass through the hole of the inner layer and be received by the recess of the outer layer.

Alternatively, or in addition, the inner layer may comprise a recess and the outer layer may comprise a recess. Two recesses enable a faster to be contained in between the inner and outer layer of the cover. This prevents the fastener from being visible from either side of the cover, in use.

The outer layer may comprise at least one of the first, second and third portions of the cover. For example, the outer layer may comprise a first portion comprising at least one opening, a second portion comprising at least one opening and a third portion comprising a preformed part configured to conform to a part of the core. Each of the openings may be a recess.

Alternatively, the third portion may be located on the inner layer of the core and may comprise at least one opening. The at least one opening in the third portion may comprise at least one hole.

The cover may be a single piece. A cover comprised of a single piece increases the ease with which the cover can be correctly positioned and subsequently secured on the core. For example, elements such as artificial veins, muscles and/or organs may be received directly by the core. Furthermore, a single piece increases the quality and realism of the resulting model and improves the manufacturability of the cover.

At least two of the openings may be recesses. The provision of two recesses enables a fastener to be contained in between two overlapping portions of the cover. This prevents the fastener from being visible from either side of the cover, in use.

Alternatively, or in addition, at least one opening may be a recess and at least one opening may be a hole.

The length of the cover in a first direction may exceed the circumference of the core in that first direction such that, in use, the cover creates an overlap when shaped around the core. An overlapping portion of the cover significantly improves the flexibility and/or malleability of the cover as the overlapping portions may be moved independently of each other, thus more freely.

Furthermore, at least two of the openings may be located within the overlapping portion. This enables the openings to be moved independently of each other and therefore allows them to be more easily aligned, in use. For example, a first portion of the cover may comprise a hole and a second portion of the cover may comprise a recess. At least one of the first and second portions may have a greater thickness than a third portion. The third portion may be preformed to conform to a part of the core.

In use, a fastener may pass through a hole in the first portion and be received by recess located within the second portion. This may secure the cover around the core.

Furthermore, according to the present invention there is provided a fastener for securing a stretchable or tensile cover which comprises at least two openings onto a core, the fastener comprising at least three shafts connected to a base plate in a non-linear arrangement, wherein the shafts each comprises at least one end portion that, in use, is received by at least one opening of the cover.

A base plate and at least three non-linearly arranged shafts comprising an end portion enable the fastener to secure a stretchable or tensile cover on a core in all degrees of freedom. At least three shafts also enable a predetermined amount of tension to be present in the cover, in use. The amount of tension may be controlled by increasing or decreasing the distance between the at least three shafts.

The fastener may comprise at least four shafts. A fastener comprising at least four shafts increases the rigidity of the connection to a cover and provides a level of redundancy. The fourth shaft, or any subsequent shafts, further increases the restraint on the cover, in use. In some embodiments, the fastener comprises at least 3, 4, 5, 6, 7, 8, 9, 10 or more than 10 shafts.

The fastener may comprise at least three shafts connected to a first surface of a base plate in a non-linear arrangement and at least three shafts connected to a second surface of the base plate in a non-linear arrangement.

Alternatively, at least one shaft may comprise a first end comprising a first end portion and a second end comprising a second end portion, and wherein the base plate is connected to the shaft between the first and second end of the shaft. Alternatively, or in addition, at least three shafts may each comprise a first end comprising a first end portion and a second end comprising a second end portion. The base plate may be connected to each shaft between the first and second end of the shaft. The first and second surface of the base plate may be opposing surfaces.

A base plate located between first and second ends of a shaft (i.e. mid-way along the shafts) or comprising shafts extended from opposing surfaces allows the base plate to be located in between two overlapping portions of the cover, in use, thus not being visible to a user.

At least one shaft may be substantially perpendicular to the base plate. A shaft substantially perpendicular to the base improves the manufacturability of the fastener and also increases the ease with which the shaft can pass through the hole and/or into the recess of the cover. For example, a longitudinal axis of at least one shaft may be substantially perpendicular to the base plate. Furthermore, a shaft substantially perpendicular to the base plate provides equal restraint on a cover to be secured in all direction away from the shaft. Each of the shafts may be substantially perpendicular to the base plate.

Alternatively, or in addition, at least one shaft may be at an angle of approximately 45 degrees relative to the base plate. Alternatively, at least one shaft may be at an angle up to 10, 20, 30, 40, 50, 60, 70, 80 or 90 degrees relative to the base plate. The angle of the shaft relative to the base plate may vary depending on the core to be covered. Each of the shafts may be at an angle relative to the base plate. The angle between each shaft and the base plate may be constant or there may be plurality of different angles between the base plate and the shafts.

At least one end portion may be a magnet. A magnetic end portion may be used to connect to an opposing magnet within the cover, thus securing the fastener in place with respect to the cover. A magnet may enable the user to more easily secure the end portion of the fastener to or within the opening as an attractive force between the end portion and the opening may be applied even when the end portion is sub optimally positioned. This magnetic force may provide any final alignment that may be required.

At least one end portion may be a bulbous end. A bulbous end provides a smooth end that will not pierce the cover. Alternatively, or in addition, the bulbous end may comprise a domed end. The bulbous end may be configured to pass through a thinner and/or narrower neck portion of an opening within the cover before reaching a wider void portion of the opening. The bulbous end may be configured to substantially fill the void portion of the opening in the cover, thus providing a secure connection between the fastener and the cover. The bulbous end may prevent the fastener from being easily withdrawn back through the thinner and/or narrower neck portion of the opening in the cover. Furthermore, the bulbous end may be configured to remain visually hidden, in use. This may also remove the ability for a user to palpate the fixing when the cover is in use. The bulbous end may be any shape. Alternatively, or in addition, the bulbous end may be at any angle relative to the shaft.

Alternatively, or in addition, at least one end portion may comprise a hook, protrusion or peg-like end. A hook, protrusion or peg-like end may be used to secure the end portion within an opening of the cover. At least one end portion may be configured to substantially fill at least one opening in the cover. Moreover, at least one end portion may comprise a snap-fastener, press-stud or portion thereof.

The base plate may have a tensile strength of at least 100 Kg/cm². A base plate with tensile strength of at least 100 Kg/cm² ensures that the positions of the shafts on the base plate are fixed relative to each other. Therefore, in use, the openings of the cover are also fixed in position relative to each other. A base plate with tensile strength of at least 100 Kg/cm² may therefore prevent the base plate from being easily stretched, in use.

Alternatively, the base plate may have a tensile strength of at least 10 Kg/cm², 50 Kg/cm², 100 Kg/cm², 150 Kg/cm², 200 Kg/cm², 250 Kg/cm², 300 Kg/cm², 400 Kg/cm² or 500 Kg/cm². For example, the base plate may be made from High-density polyethylene (HDPE) or Polypropylene (PP).

The base plate may have a tensile modulus of less than 20,000 Kg/cm². A base plate with tensile modulus of less than 20,000 Kg/cm² enables the base plate to conform to the surface of the cover and/or core, in use. A slightly flexible base plate may conform to the surface of the cover/core while retaining the shafts of the pegs perpendicular to the base plate. This ensures that the openings of the cover are fixed in position relative to each other, in use. A base plate with tensile modulus of less than 20,000 Kg/cm² may therefore allow the base plate to easily be bent, in use. This allows the base plate to conform to either a curved or flat surface.

Alternatively, the base plate may have a tensile modulus less than 20,000 Kg/cm², 15,000 Kg/cm², 10,000 Kg/cm², 7,500 Kg/cm², 6,000 Kg/cm², 5,000 Kg/cm², 4,000 Kg/cm², 3,000 Kg/cm² or 2,000 Kg/cm². For example, the base plate may be made from High-density polyethylene (HDPE) or Polypropylene (PP).

The base plate may have a thickness of less than 20 mm. A base plate with a thickness of less than 20mm improves the haptics of the resulting model. Alternatively, the base plate may have a thickness of less than 20 mm, 15 mm, 10 mm, 8 mm, 6 mm, 5mm, 4 mm, 3mm, 2 mm or 1 mm. Furthermore, according to the present invention there is provided a venepuncture simulation kit of parts comprising a core for receiving a cover, wherein the cover comprises at least two openings, wherein the cover is shaped to provide an enclosure to accommodate the core when the at least two openings are aligned, and wherein the cover is secured in the correct position by a fastener comprising at least three shafts connected to a base plate in a non-linear arrangement, wherein the shafts each comprises at least one end portion that, in use, is received by at least one opening of the cover.

The cover may comprise a plurality of openings. The plurality of openings may be configured to receive a plurality of shafts connected to a single base. The base plate may comprise at least 3, 4, 5, 6, 8, 10 or more than 10 shafts. Alternatively, or in addition, the plurality of openings may be configured to receive a plurality of shafts connected to a plurality of bases. At least two base plates each comprising at least three shafts may be used. Alternatively, at least 2, 3, 4, 5, 6, 8, 10 or more than 10 base plates may be used. Each base may comprise at least 3, 4, 5, 6, 8, 10 or more than 10 shafts.

The invention will now be further and more particularly described, by way of example only, with reference to the accompanying drawings.
Figure 1 shows cover comprising an inner layer and an outer layer;
Figure 2 shows a cover comprised of a single piece;
Figure 3 shows a cover comprising a first portion secured to a plurality of fasteners;
Figure 4A shows a first and second overlapping portion of the cover;
Figure 4B shows a first and second portion of the cover overlapping a third portion of the cover;
Figure 5A shows a fastener comprising a base plate and three shafts;
Figure 5B shows the fastener of Figure 5A in isometric view;
Figure 5C shows a fastener comprising three shafts on each opposing surface of the base plate;
Figure 6 shows a fastener comprising a base plate and four shafts;
Figure 7A shows a cover comprising an inner layer and an outer layer being held in position by a fastener;
Figure 7B shows a cover comprised of a single piece held in position by a fastener; and
Figure 8 shows a cover enclosing a core.

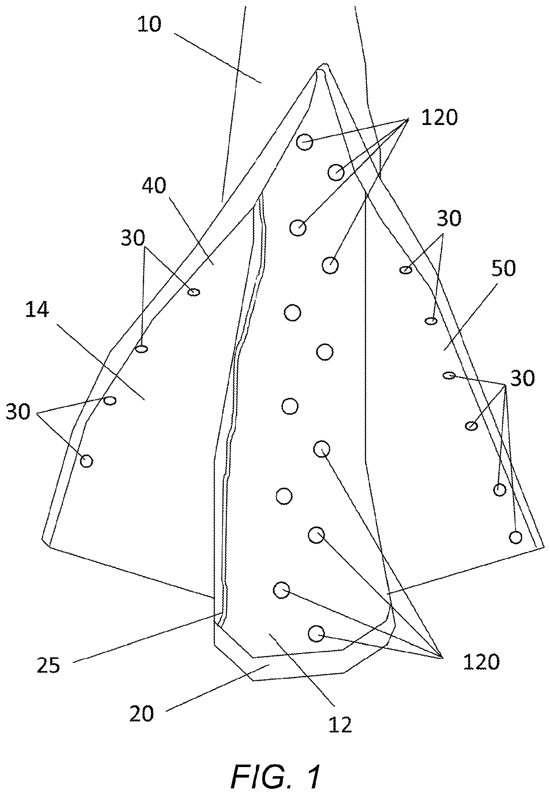

Figure 1 shows a cover 10 comprising an inner layer 12 and an outer layer 14. In the illustrated configuration, the cover 10 is partially enclosing a core 20. The outer layer 14 of the cover 10 comprises a plurality of openings 30. The inner layer 12 is in direct contact with the core 20 and is configured to receive artificial veins 25. The inner layer 12 further comprises a plurality of openings (not shown). More specifically, the inner layer 12 comprises a plurality of holes (not shown).

Figure 1 also shows the end portions 120 of a plurality of shafts 110 connected to a base plate 130 in a non-linear arrangement to form a fastener 100. The base plate of the fastener is located beneath the inner layer 12 of the cover and therefore is not visible. However, each end portion 120 has passed through a hole in the inner layer and therefore extends above the inner layer 12.

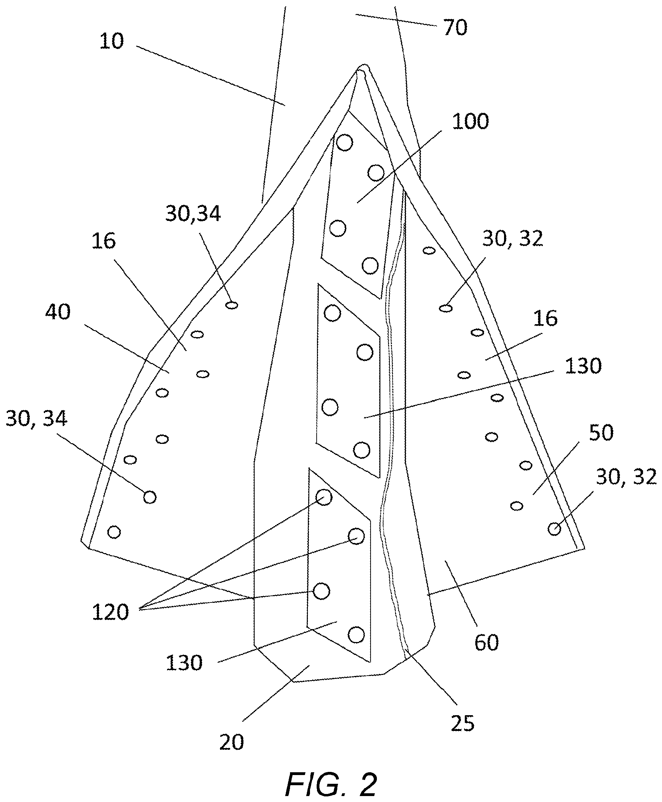

The outer layer 14 is configured to enclose the inner layer 12 and the core 20. The outer layer of the cover comprises a first portion 40 and a second portion 50 located on opposing sides of a longitudinal slit. The first portion 40 and second portion 50 each comprise a plurality of openings 30 configured to receive the end portion 120 of a fastener 100. Thus, in use, the first and second portions of the cover are configured to butt up against each other to enclose the inner layer 12 and the core 20. Each opening 30 in the outer layer 14 of the cover 10 is therefore aligned with a hole 34 in the inner layer 12. The fastener 100 is configured to secure the outer layer 14 in position around the core. More specifically, as shown in Figure 2, the first and second portion of the outer layer 14 each comprise a plurality of recesses 32 configured to receive an end portion 120 of a fastener 100. Each recess 32 in the outer layer 14 of the cover 10 is aligned with a hole in the inner layer. Each recess 32 is configured to receive the end portion 120 of the fastener 100.

Figure 2 shows a cover 10 that is a single piece. In the condition illustrated in Figure 2, the cover 10 is partially enclosing a core 20. The cover 10 comprises a plurality of openings 30. The core 20 comprises guides configured to receive artificial veins 25 and the cover 10 is configured to enclose the core 20. The cover comprises a first portion 40 and a second portion 50 located on opposing sides of a longitudinal slit. The first portion 40 and second portion 50 each comprise a plurality of openings 30 sized and positioned to receive the end portion 120 of the fastener 100. More specifically, the first portion 40 comprises a plurality of holes 34 and the second portion 50 comprises a plurality of recesses 32.

The first portion 40 is configured to wrap around the core 20 and the end portions 120 of a fasteners 100 are located such that they pass through each holes 34 within the first portion 40 when the cover 10 is correctly aligned on the core 20. The second portion 50 is configured to wrap around the core 20 in the opposing direction to the first potion 40, thus overlapping the first portion 40. Each hole 34 in the first portion 40 is configured to align with a recess 32 in the second portion 50. Each end portion 120 of the fastener 100 that has passed through a hole 34 in the first portion 40 is then received by the aligned recess 34 in the second portion 50, thus securing the cover in a position and enclosing the core. More specifically, each of the first 40 and second 50 portions comprise non-linearly arranged openings 30. However, in some embodiments not illustrated in the accompanying drawings, the openings 30 may be linearly arranged.

Alternatively, in some embodiments, not shown, the cover 10 may be a single piece and the first portion 40 and second portion 50 are configured to butt up against each other to enclose the core 20. Consequently, each of the openings may be a recess configured receive an end portion 120 of a fastener 100. Consequently, the fastener 100 is configured to hold the cover 10 in position.

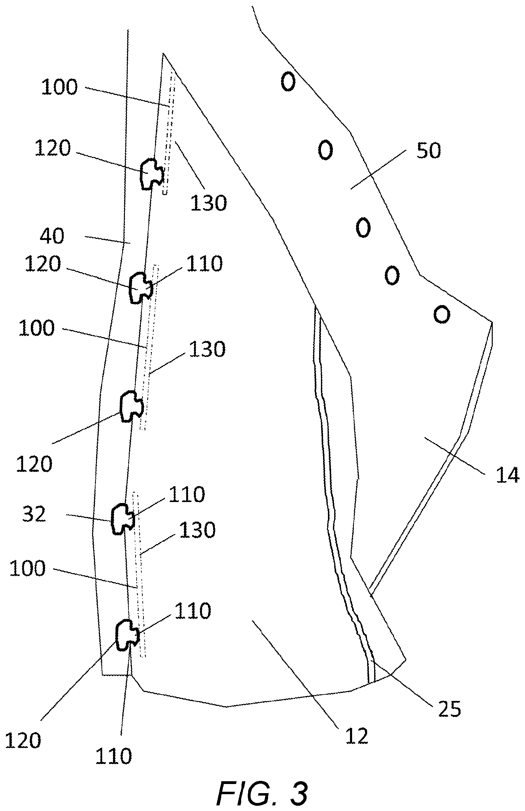

Figure 3 shows a cover 10 comprising a first portion 40 secured to a plurality of fasteners 100. Each fastener 100 comprises a base plate 130 located, in use, beneath the inner layer 12 of the cover 10. The end portion 120 of each fastener 100 has passed through a hole (not shown in Figure 3) in the inner layer 12 and is secured within a recess 32 of the cover 10.

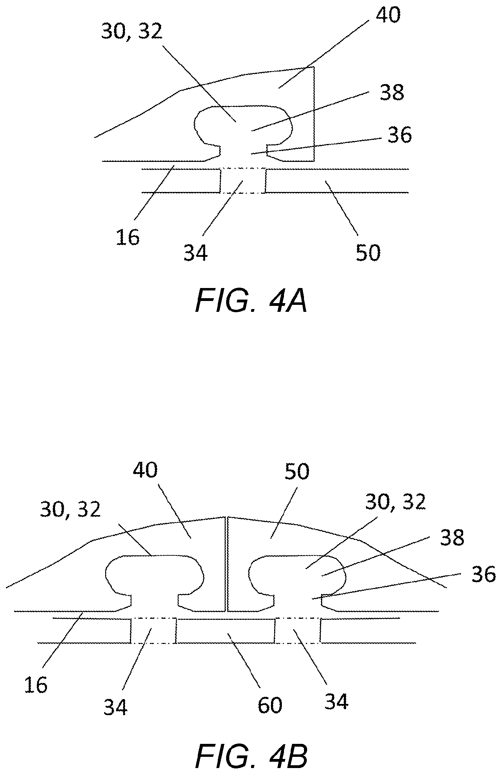

Figure 4A shows a first portion 40 and a second portion 50 of the cover 10. The first and second portions are overlapping, thus creating an overlapping portion 16. The opening 30 in the first portion 40 is a recess 32 comprising a neck portion 36 and a void portion 38. The neck portion is thinner than the void portion. The opening 30 in the second portion 50 is a hole 34. The recess and the hole are aligned. The first portion 40 has greater thickness than the second portion 50. The increases thickness in the first portion enables a larger recess 32 to be contained therein. The first portion may comprise a tapered end (note shown) so that the step between the first portion 40 and the second 50 portion at the edge of the overlapping portion 16 is minimal.

For example, the third portion of the cover may be approximately 2mm thick. However, in some embodiments, a third portion of the cover is up to 0.5 mm, 1 mm, 2 mm, 4 mm, 6 mm, 10 mm, 15 mm, 20mm or 30 mm thick. Conversely, the first and/or second portion may approximately 20mm thick. However, in some embodiments, the first and/or second portion of the cover is up to 0.5 mm, 1 mm, 2 mm, 4 mm, 6 mm, 10 mm, 15 mm, 20mm or 30 mm thick. Moreover, the cover may be made from silicone. However, any suitable material may be used.

In Figure 4A, the first portion 40 may be the outer layer 12 of the cover 10 and the second portion 50 may be the inner layer 14 of the cover 10. Alternatively, the cover 10 may be a single piece and the first portion 40 and the second portion 50 may be two portions a cover comprised of a single piece.

Figure 4B shows a first portion 40 and second portion 50 overlapping a third portion 60 of the cover 10. The opening 30 in the first portion 40 is a recess 32 comprising a neck portion 36 and a void portion 38. The neck portion is thinner than the void portion. The opening 30 in the third portion 60 is a hole 34. The recess and the hole are aligned. The first portion 40 has greater thickness than the third portion 60.

Figure 4B further comprises a second portion 50 that mirrors the first portion 40. Consequently, the opening 30 in the second portion 50 is a recess 32 comprising a neck portion 36 and a void portion 38. The neck portion is thinner than the void portion. The recess 32 in the second portion 50 is aligned with a hole 34 in the third portion. The second portion 50 has greater thickness than the third portion 60. The first 40 and second 50 portions are located on the outer 14 layer of the cover 10 and the third portion 60 is located on the inner layer 12 of the cover 10.

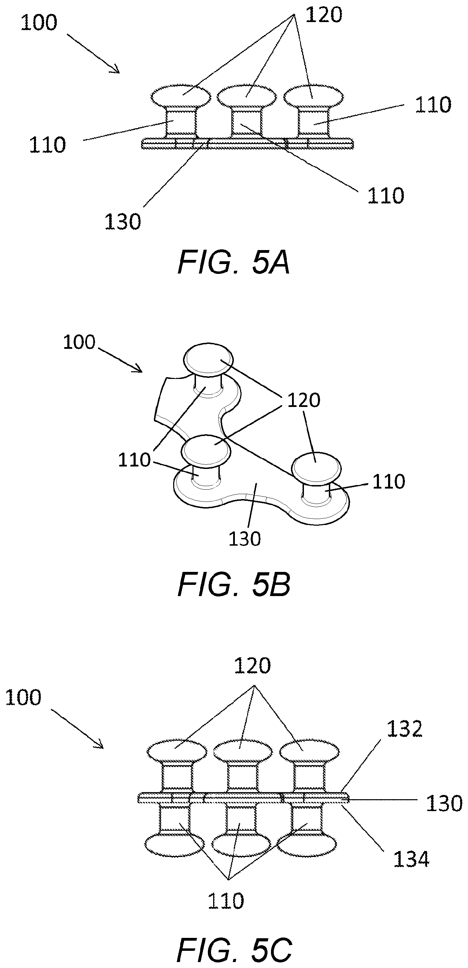

Figure 5A shows a fastener 100 comprising a base plate 130 and three shafts 110. Each shaft 110 comprises an end portion 120, wherein the end portion is bulbous. Figure 5B shows the fastener of Figure 5A in isometric view, thus showing that the shafts 110 are connected to the base plate 130 in a non-linear arrangement.

Figure 5C shows a fastener 100 comprising three shafts 110 on each of a first surface 132 and a second surface 134 of the base plate 130. The first and second surfaces of the base plate are opposing surfaces. As in figure 5A, the shafts 110 are connected to the base plate 130 in a non-linear arrangement, which can be seen when viewed in isometric.

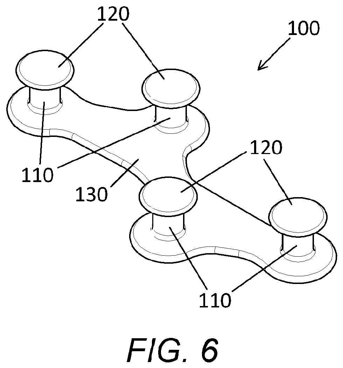

Figure 6 shows a fastener comprising a base plate 130 and four shafts 110. Each shaft 110 comprises an end portion 120, wherein each end portion is bulbous. The shafts are connected to the base plate in a non-linear arrangement.

The base plate 130 is approximately 2mm thick. However, in some embodiments, the base plate is up to 0.1 mm, 0.5 mm, 1 mm, 2 mm, 3 mm, 5 mm, 10 mm, or 20 mm thick. The base plate may be more than 20mm thick. The shafts are between 5 mm and 100 mm apart. However, in some embodiments, the shafts are up to 5 mm, 10 mm, 20 mm, 40 mm, 60 mm, 80 mm, 100 mm, or 200 mm apart. In some embodiments the shafts are more than 200 mm apart.

The end portion of each shaft may is approximately 10 mm from the base plate and approximately 10 mm in diameter. However, in some embodiments, the end portion of each shaft may be up to 5 mm, 8 mm, 10 mm, 15 mm, 20 mm, 25 mm, 40 mm, 50 mm or 100mm from the base plate. Furthermore, in some embodiments, the end portion of the shaft may be up to 5 mm, 8 mm, 10 mm, 15 mm, 20 mm, 25 mm, 40 mm, 50 mm or 100 mm in diameter. Moreover, in some embodiments, the end portion of each shaft is more than 100 mm from the base plate and is more than 100 mm in diameter.

The shafts are approximately 5mm in diameter. However, in some embodiments, the shafts are up to 1 mm, 2 mm, 3 mm, 5 mm, 8 mm, 10 mm, 20 mm or 30 mm in diameter. In some embodiments, the shafts are more than 30 mm in diameter.

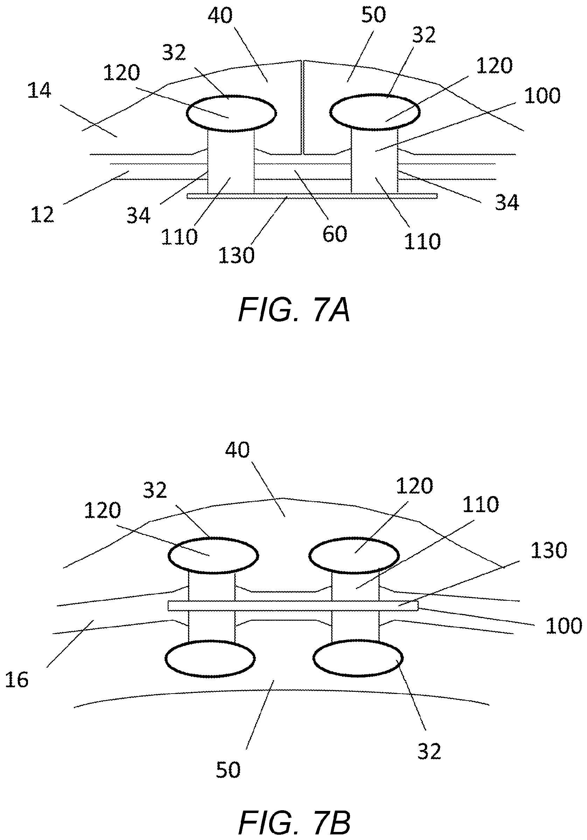

Figure 7A shows a cover comprising an inner layer 12 and an outer layer 14 being held in position by a fastener 100 in order to enclose a core (not shown). The outer layer 14 comprises a first portion 40 and second portion 50. The inner layer 12 comprises a third portion 60. Each end portion 120 of a shaft 110 attached to the base plate 130 has passed through a hole 34 in the third portion 60. Moreover, the end portion 120 of a first shaft 110 attached to the base plate 130 is secured within a recess 32 of the first portion 40 and the end portion 120 of a second shaft 110 attached to the base plate 130 is secured within a recess 32 of the second portion 40.

Figure 7B shows a cover comprised of a single piece held in position by a fastener 100. The cover comprises a first portion 40 comprising a plurality of recesses 32 and a second portion 50 comprising a plurality of recesses 32. Each recess 32 in the first portion is aligned with a recess in the second portion such that the first and second portions comprise an overlapping portion 16. A fastener 100 is located within the overlapping portion. The fastener 100 comprises a plurality of shafts 110, each of which comprises a bulbous end portion 120 configured to be received by a recess 32 within either of the first 40 or second 50 portions, thus securing the cover around a core (not shown).

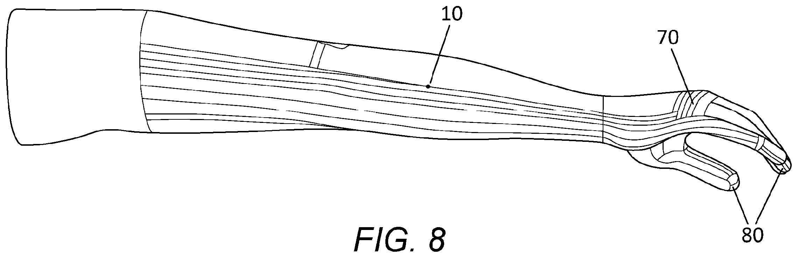

Figure 8 shows a cover 10 enclosing a core (not visible). The cover 10 comprises a preformed part 70 configured to conform to the shape of the core 20. In Figure 8, the preformed portion 70 is substantially hand-shaped. Furthermore, the preformed portion 70 is sealed at one end 80, thus providing alignment of the cover on the core. In Figure 8, the cover encloses the core and the fasteners are not visible, thus providing a venepuncture model with realistic haptics.

The cover is between 100 mm and 1500mm in length. For example, the cover may be sized to reflect the arm of a small baby, thus being approximately 150 mm in length. Alternatively, the cover may be sized to reflect the leg of a large adult, thus being approximately 1500 mm in length. However, any shape or sized cover may be used. For example, the cover may be substantially rectangular in order to reflect the torso of a human or animal.

Various further aspects and embodiments of the present invention will be apparent to those skilled in the art in view of the present disclosure.
"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

It will further be appreciated by those skilled in the art that although the invention has been described by way of example with reference to several embodiments. It is not limited to the disclosed embodiments and that alternative embodiments could be constructed without departing from the scope of the invention as defined in the appended claims.

## Claims

1. A cover (10) for a core (20), the cover comprising:
at least two openings (30),
wherein the cover (10) is configured to provide an enclosure to accommodate the core (20) when the at least two openings (30) are aligned, and
**characterised in that** at least one opening (30) is a recess (32).

2. The cover (10) according to claim 1, wherein at least one opening (30) is a hole (34).

3. The cover (10) according to any preceding claim, wherein at least one opening (30) is located in a first portion (40) of the cover (10) and at least one opening (30) is located in a second portion (50) of the cover (10).

4. The cover (10) according to claim 3, wherein at least one of the first (40) and second (50) portions has a greater thickness than a third portion (60) of the cover (10).

5. The cover (10) according to any preceding claim, wherein at least one opening (30) comprises a neck portion (36) and a void portion (38) and wherein the neck portion (36) is narrower than the void portion (38).

6. The cover (10) according to any preceding claim, wherein the cover (10) comprises an inner layer (12) and an outer layer (14).

7. The cover (10) according to claim 6, wherein the inner layer (12) comprises at least one opening (30) and the outer layer (14) comprises at least one opening (30).

8. The cover (10) according to any preceding claim, wherein the length of the cover (10) in a first direction exceeds the circumference of the core (20) in that first direction such that, in use, the cover creates an overlap (16) when shaped around the core (20).

9. A fastener (100) for securing the cover (10) of claim 1 onto a core (20), wherein the fastener (100) comprises:
at least three shafts (110) connected to a base plate (130) in a non-linear arrangement,
wherein the shafts (110) each comprises at least one end portion (120) that, in use, is received by at least one opening (30) of the cover (10), and
**characterised in that** at least one end portion (120) is a bulbous end.

10. The fastener (100) according to claim 9, wherein the fastener (100) comprises at least three shafts (110) connected to a first surface (132) of a base plate (130) in a non-linear arrangement and at least three shafts (110) connected to a second surface (134) of the base (130) plate in a non-linear arrangement.

11. The fastener (100) according to claim 9 or claim 10, wherein at least one shaft (110) is substantially perpendicular to the base plate (130).

12. The fastener (100) according to any of claims 9 to 11, wherein the base plate (130) has a tensile strength of at least 100 Kg/cm².

13. The fastener (100) according to any of claims 9 to 12, wherein the base plate (130) has a tensile modulus of less than 20,000 Kg/cm².

14. The fastener (100) according to any of claims 9 to 13, wherein the base plate (130) has a thickness of less than 20 mm.

15. A venepuncture simulation kit of parts comprising a core (20), at least one cover (10) according to any one of claims 1 to 8, and at least one fastener (100) according to any one of claims 9 to 14 for securing the cover (10) on the core (20).

## Patentansprüche

1. Abdeckung (10) für einen Kern (20), wobei die Abdeckung Folgendes umfasst:
mindestens zwei Öffnungen (30),
wobei die Abdeckung (10) dazu konfiguriert ist, eine Umhüllung bereitzustellen, um den Kern (20) unterzubringen, wenn die mindestens zwei Öffnungen (30) ausgerichtet sind, und
**dadurch gekennzeichnet, dass** mindestens eine Öffnung (30) eine Aussparung (32) ist.

2. Abdeckung (10) nach Anspruch 1, wobei mindestens eine Öffnung (30) ein Loch (34) ist.

3. Abdeckung (10) nach einem vorhergehenden Anspruch, wobei sich mindestens eine Öffnung (30) in einem ersten Abschnitt (40) der Abdeckung (10) befindet und sich mindestens eine Öffnung (30) in einem zweiten Abschnitt (50) der Abdeckung (10) befindet.

4. Abdeckung (10) nach Anspruch 3, wobei mindestens einer von dem ersten (40) und dem zweiten (50) Abschnitt eine größere Dicke als ein dritter Abschnitt (60) der Abdeckung (10) aufweist.

5. Abdeckung (10) nach einem vorhergehenden Anspruch, wobei mindestens eine Öffnung (30) einen Halsabschnitt (36) und einen Hohlraumabschnitt (38) umfasst und wobei der Halsabschnitt (36) schmaler als der Hohlraumabschnitt (38) ist.

6. Abdeckung (10) nach einem vorhergehenden Anspruch, wobei die Abdeckung (10) eine Innenschicht (12) und eine Außenschicht (14) umfasst.

7. Abdeckung (10) nach Anspruch 6, wobei die Innenschicht (12) mindestens eine Öffnung (30) umfasst und die Außenschicht (14) mindestens eine Öffnung (30) umfasst.

8. Abdeckung (10) nach einem vorhergehenden Anspruch, wobei die Länge der Abdeckung (10) in einer ersten Richtung den Umfang des Kerns (20) in dieser ersten Richtung übersteigt, sodass die Abdeckung im Gebrauch, wenn sie um den Kern (20) geformt ist, eine Überlappung (16) erzeugt.

9. Befestigungselement (100) zum Fixieren der Abdeckung (10) nach Anspruch 1 an einem Kern (20), wobei das Befestigungselement (100) Folgendes umfasst:
mindestens drei Schäfte (110), die in einer nichtlinearen Anordnung mit einer Grundplatte (130) verbunden sind,
wobei die Schäfte (110) jeweils mindestens einen Endabschnitt (120) umfassen, der im Gebrauch durch mindestens eine Öffnung (30) der Abdeckung (10) aufgenommen wird, und
**dadurch gekennzeichnet, dass** mindestens ein Endabschnitt (120) ein bauchiges Ende ist.

10. Befestigungselement (100) nach Anspruch 9, wobei das Befestigungselement (100) mindestens drei Schäfte (110), die mit einer ersten Oberfläche (132) einer Grundplatte (130) in einer nichtlinearen Anordnung verbunden sind, und mindestens drei Schäfte (110), die mit einer zweiten Oberfläche (134) der Grundplatte (130) in einer nichtlinearen Anordnung verbunden sind, umfasst.

11. Befestigungselement (100) nach Anspruch 9 oder Anspruch 10, wobei mindestens ein Schaft (110) im Wesentlichen senkrecht zu der Grundplatte (130) ist.

12. Befestigungselement (100) nach einem der Ansprüche 9 bis 11, wobei die Grundplatte (130) eine Zugfestigkeit von mindestens 100 kg/cm² aufweist.

13. Befestigungselement (100) nach einem der Ansprüche 9 bis 12, wobei die Grundplatte (130) einen Zugmodul von weniger als 20.000 kg/cm² aufweist.

14. Befestigungselement (100) nach einem der Ansprüche 9 bis 13, wobei die Grundplatte (130) eine Dicke von weniger als 20 mm aufweist.

15. Teilesatz zur Venenpunktionssimulation, umfassend einen Kern (20), mindestens eine Abdeckung (10) nach einem der Ansprüche 1 bis 8 und mindestens ein Befestigungselement (100) nach einem der Ansprüche 9 bis 14 zum Fixieren der Abdeckung (10) an dem Kern (20).

## Revendications

1. Élément de recouvrement (10) pour un noyau (20), l'élément de recouvrement comprenant :
au moins deux ouvertures (30),
dans lequel l'élément de recouvrement (10) est conçu pour fournir une enceinte pour loger le noyau (20) lorsque les au moins deux ouvertures (30) sont alignées, et
**caractérisé en ce qu'**au moins une ouverture (30) est un évidement (32).

2. Élément de recouvrement (10) selon la revendication 1, dans lequel au moins une ouverture (30) est un trou (34).

3. Élément de recouvrement (10) selon une quelconque revendication précédente, dans lequel au moins une ouverture (30) est située dans une première partie (40) de l'élément de recouvrement (10) et au moins une ouverture (30) est située dans une deuxième partie (50) de l'élément de recouvrement (10).

4. Élément de recouvrement (10) selon la revendication 3, dans lequel au moins l'une des première (40) et deuxième (50) parties présente une épaisseur supérieure à une troisième partie (60) de l'élément de recouvrement (10).

5. Élément de recouvrement (10) selon une quelconque revendication précédente, dans lequel au moins une ouverture (30) comprend une partie de col (36) et une partie de vide (38) et dans lequel la partie de col (36) est plus étroite que la partie de vide (38).

6. Élément de recouvrement (10) selon une quelconque revendication précédente, dans lequel l'élément de recouvrement (10) comprend une couche intérieure (12) et une couche extérieure (14).

7. Élément de recouvrement (10) selon la revendication 6, dans lequel la couche intérieure (12) comprend au moins une ouverture (30) et la couche extérieure (14) comprend au moins une ouverture (30).

8. Élément de recouvrement (10) selon une quelconque revendication précédente, dans lequel la longueur de l'élément de recouvrement (10) dans une première direction dépasse la circonférence du noyau (20) dans cette première direction de sorte que, lors de l'utilisation, l'élément de recouvrement crée un chevauchement (16) lorsqu'il est formé autour du noyau (20).

9. Attache (100) pour fixer l'élément de recouvrement (10) de la revendication 1 sur un noyau (20), dans laquelle l'attache (100) comprend :
au moins trois arbres (110) reliés à une plaque de base (130) selon un agencement non linéaire,
dans laquelle les arbres (110) comprennent chacun au moins une partie d'extrémité (120) qui, lors de l'utilisation, est reçue par au moins une ouverture (30) de l'élément de recouvrement (10), et
**caractérisée en ce qu'**au moins une partie d'extrémité (120) est une extrémité bulbeuse.

10. Attache (100) selon la revendication 9, dans laquelle l'attache (100) comprend au moins trois arbres (110) reliés à une première surface (132) d'une plaque de base (130) selon un agencement non linéaire et au moins trois arbres (110) reliés à une seconde surface (134) de la plaque de base (130) selon un agencement non linéaire.

11. Attache (100) selon la revendication 9 ou la revendication 10, dans laquelle au moins un arbre (110) est sensiblement perpendiculaire à la plaque de base (130).

12. Attache (100) selon l'une quelconque des revendications 9 à 11, dans lequel la plaque de base (130) présente une résistance à la traction d'au moins 100 kg/cm².

13. Attache (100) selon l'une quelconque des revendications 9 à 12, dans laquelle la plaque de base (130) présente un module de traction inférieur à 20 000 kg/cm².

14. Attache (100) selon l'une quelconque des revendications 9 à 13, dans laquelle la plaque de base (130) présente une épaisseur inférieure à 20 mm.

15. Kit de simulation de ponction veineuse de pièces comprenant un noyau (20), au moins un élément de recouvrement (10) selon l'une quelconque des revendications 1 à 8, et au moins une attache (100) selon l'une quelconque des revendications 9 à 14 pour fixer l'élément de recouvrement (10) sur le noyau (20).
